# EUROPEAN PATENT APPLICATION

(11) **EP 4 216 530 A1**
(43) Date of publication of application: **26.07.2023**
(21) Application number: 21869014.7
(22) Date of filing: 16.07.2021
(51) Int. Cl.: H04N 1/031, H04N 1/12

(54) **OPTICAL LINE SENSOR MEMBER AND METHOD FOR MANUFACTURING SAME**

(30) Priority: 16.09.2020 JP 2020155653
(71) Applicant: Vienex Corporation, Kanonji-shi, Kagawa 768-0021 (JP)
(72) Inventor: MARUYAMA, Koji, Kanonji-shi, Kagawa 768-0021 (JP); Doi, Kunihiko, Kanonji-shi, Kagawa 768-0021 (JP)
(74) Representative: Mewburn Ellis LLP
(86) International application number: PCT/JP2021/026790
(87) International publication number: WO 2022/059327

(57) **Abstract**

An optical line sensor member 9 constituting a part of an optical line sensor unit 1 that reads a paper sheet includes a transparent member 11 that transmit light and a cover member 12, and the transparent member 11 has a substantially trapezoidal cross section taken along a direction orthogonal to a main scanning direction and has a tapered surface on a side parallel to the main scanning direction. The substantially trapezoidal cross section is a cross section in which the conveyance path side on which a paper sheet is conveyed is a short side. Further, the cover member 12 also has a tapered surface formed substantially parallel to the transparent member 11, and the tapered surface of the transparent member and the tapered surface of the cover member are bonded to each other so that the transparent member and the cover member are joined.

## Description

### TECHNICAL FIELD

The present invention relates to an optical line sensor member for protecting a component provided inside an optical line sensor unit for reading paper sheets such as paper money and securities from paper dust, dust, and the like, and a method for manufacturing the optical line sensor member.

### BACKGROUND ART

Conventionally, an optical line sensor member for protecting a component provided inside an optical line sensor unit for reading paper sheets such as paper money and securities from paper dust, dust, and the like is generally constituted by a transparent portion that transmits light and an opaque portion that does not transmit light. Specifically, the transparent portion is in a state of being surrounded by the opaque portion. In a case where a step is generated at a boundary between the transparent portion and the opaque portion, paper sheets being conveyed are caught by the step, and a paper jam may occur. For example, in a case where paper sheets are conveyed at a high speed, a paper jam occurs even with a slight step of several 10 pm (50 to 60 pm). Therefore, in order to stably convey paper sheets, it is desirable to minimize a step in the transparent portion and the opaque portion.

In view of such a background, an optical line sensor member has been conventionally manufactured using a method for reducing a step at a boundary between the transparent portion and the opaque portion. (See Patent Documents 1, 2, and 3)

### PRIOR ART DOCUMENTS

### PATENT DOCUMENTS

Patent Document 1: WO 2015/098300 A
Patent Document 2: JP 2012-075008 A
Patent Document 3: JP 2010-268131 A

### SUMMARY OF THE INVENTION

### PROBLEMS TO BE SOLVED BY THE INVENTION

As a method for manufacturing the optical line sensor member, a method for forming a member constituting a transparent portion (hereinafter referred to as "transparent member") and a member constituting an opaque portion (hereinafter referred to as "cover member") integrally is used. Specifically, after the transparent member is arranged in a mold, a material (generally, a resin material) for forming the cover member is poured, and the transparent member and the cover member are formed integrally. In a case of this manufacturing method, delicate control is required in order to prevent the cover member from covering a portion of the transparent member through which light is transmitted.

On the other hand, as another method for manufacturing the optical line sensor member, a method of bonding the transparent member and the cover member may be used. In this case, due to warpage of each of the transparent member and the cover member, a step is generated at a boundary between the transparent member and the cover member, that is, at a joint portion. Therefore, in the method of bonding the transparent member and the cover member, the transparent member and the cover member are bonded to each other by pressing the transparent member and the cover member against a flat plate in order to prevent generation of a step at a joint portion between the transparent member and the cover member. However, in a case where the transparent member and the cover member are pressed against a flat plate, it is necessary to appropriately correct warpage of the transparent member and the cover member. That is, also in a case where the transparent member and the cover member are pressed against a flat plate, delicate control is required.

Furthermore, even if the correction is accurately achieved, in a case of the transparent member and the cover member having a rectangular cross section conventionally used, there is a high possibility that a slight step as described above occurs at a joint portion between the transparent member and the cover member. In addition, in the method of bonding the transparent member and the cover member, it is not realistic to prevent a step, which is a difference in thickness between the transparent member and the cover member, to several 10 µm or less in the dimension in a main scanning direction exceeding 200 mm from the viewpoint of an error in a manufacturing process.

In view of such circumstances, an object of the present invention is to provide an optical line sensor member that can be manufactured by using a cover member and a transparent member each provided with a tapered surface, and at the same time, can be manufactured by a simple facility without requiring fine control, in which a step of a joint portion between the transparent member and the cover member can be prevented.

### MEANS FOR SOLVING THE PROBLEMS

An optical line sensor member according to the present invention constitutes a part of an optical line sensor unit that reads a paper sheet. The optical line sensor member includes a transparent member that transmits light and a cover member that surrounds the transparent member and does not transmit light. The transparent member has a substantially trapezoidal cross section taken along a direction orthogonal to a main scanning direction, and has a tapered surface on a side parallel to the main scanning direction. The substantially trapezoidal cross section is a cross section in which the conveyance path side on which a paper sheet is conveyed is an upper base (short side). Further, the cover member also has a tapered surface formed substantially parallel to the transparent member, and the tapered surface of the transparent member and the tapered surface of the cover member are bonded to each other, so that the transparent member and the cover member are joined.

The cross section of the transparent member taken along the direction orthogonal to the main scanning direction only needs to be a substantially trapezoidal shape in whole or in part in the main scanning direction.

A material of the transparent member is desirably glass, transparent resin, or the like, which does not affect the performance of an optical line sensor.

The optical line sensor member is manufactured by simultaneously pressing the transparent member and the cover member against a flat plate and bonding them. As a bonding procedure, first, the conveyance path side of the cover member is pressed against the flat plate and set. After the above, the transparent member is pressed against the flat plate from the side opposite to the conveyance path, and the transparent member and the cover member are bonded to each other in a manner that the tapered surfaces of the transparent member and the cover member are aligned with each other.

At the time of bonding, only the transparent member is pressed against the flat plate side by applying a force. The cover member is pressed against the flat plate as a force is applied to the tapered surface of the cover member from the tapered surface of the transparent member. By the above, it is possible to press the transparent member and the cover member against the flat plate with an even force in the entire side of a joint portion between the transparent member and the cover member, and it is possible to uniformly reduce a step in the entire joint portion.

An adhesive is used for bonding the transparent member and the cover member. As a type of the adhesive, an ultraviolet curable adhesive, a thermosetting adhesive, a thermoplastic adhesive, a moisture curable adhesive, a two-liquid curable adhesive, or the like can be applied.

### EFFECTS OF THE INVENTION

According to the invention of the present application, by a simple method in which the transparent member and the cover member are bonded to each other by pressing the tapered surface of the transparent member against the tapered surface of the cover member from the opposite side of the paper sheet conveyance path of the transparent member, it is possible to make surfaces of the transparent member and the cover member on the conveyance path side flush with each other, and it is possible to prevent a paper sheet from being caught during conveyance.

### BRIEF DESCRIPTION OF THE DRAWINGS

FIG. 1 is a cross-sectional view schematically illustrating an example of a configuration of an optical line sensor unit according to an embodiment of the present invention.
FIG. 2 is a perspective view schematically illustrating a part of an example of the configuration of the optical line sensor unit according to the embodiment of the present invention.
FIG. 3 is a perspective view schematically illustrating an example of a configuration of an optical line sensor member according to the embodiment of the present invention.
FIG. 4 is a perspective view schematically illustrating an example of a configuration of a transparent member according to the embodiment of the present invention.
FIG. 5 is a perspective view schematically illustrating an example of a configuration of a cover member according to the embodiment of the present invention.
FIG. 6 is a cross-sectional view schematically illustrating an example of a state in which the cover member is arranged on a flat plate.
FIG. 7 is a cross-sectional view schematically illustrating an example of a state in which the transparent member is pressed.
FIG. 8 is a cross-sectional view schematically illustrating another example of the state in which the transparent member is pressed.
FIG. 9 is a cross-sectional view schematically illustrating an example of a state in which an adhesive is cured.
FIG. 10 is a plan view schematically illustrating an example of a configuration of the cover member according to a variation of the present invention.
FIG. 11 is a plan view schematically illustrating another example of the configuration of the cover member according to the variation of the present invention.
FIG. 12 is a plan view schematically illustrating another example of the configuration of the cover member according to the variation of the present invention.
FIG. 13 is a plan view schematically illustrating still another example of the configuration of the cover member according to the variation of the present invention.

### MODE FOR CARRYING OUT THE INVENTION

### 1. Overall configuration of optical line sensor unit

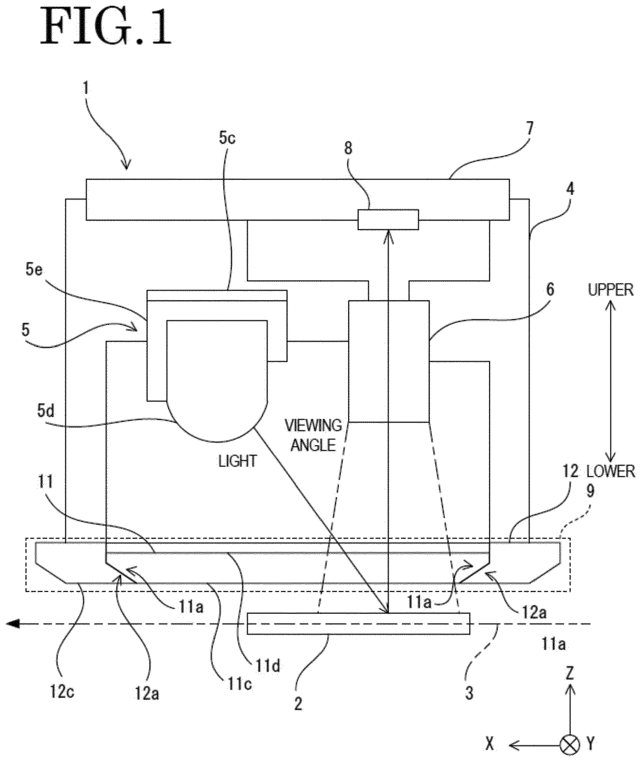

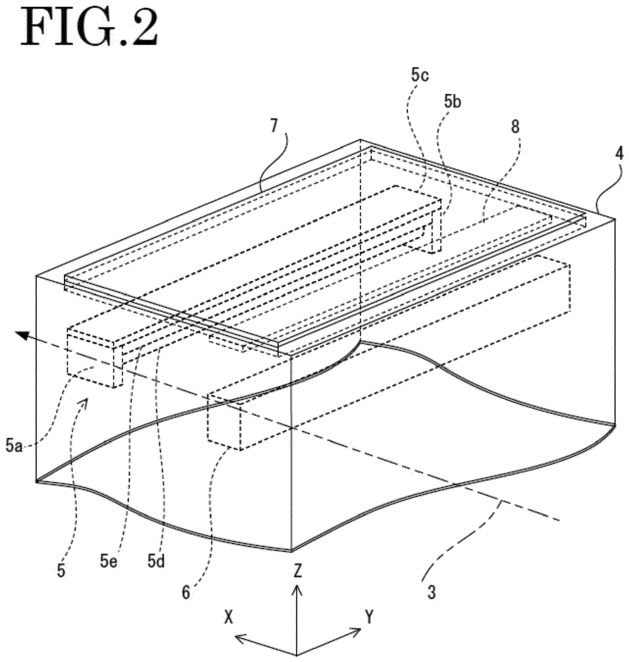

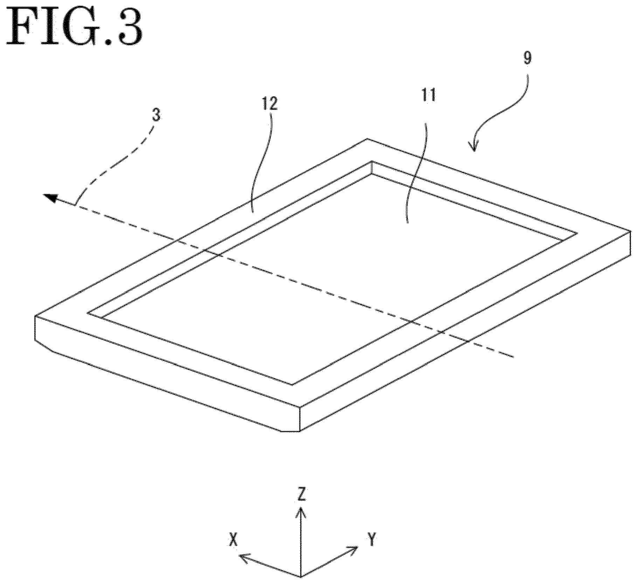

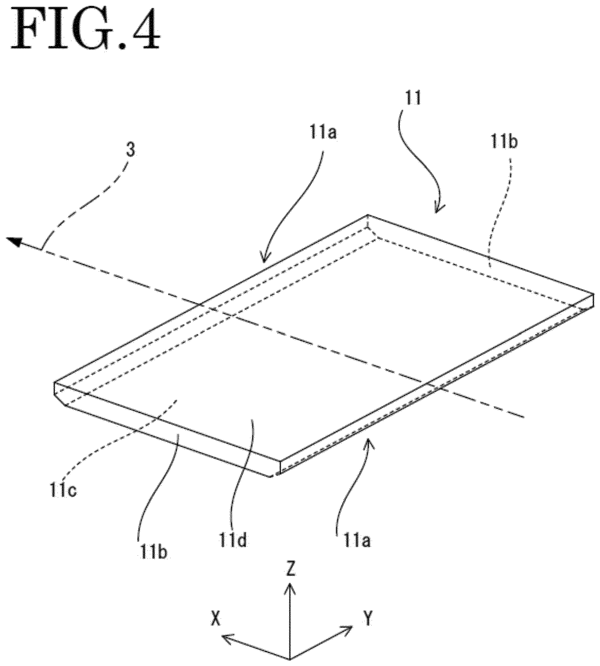

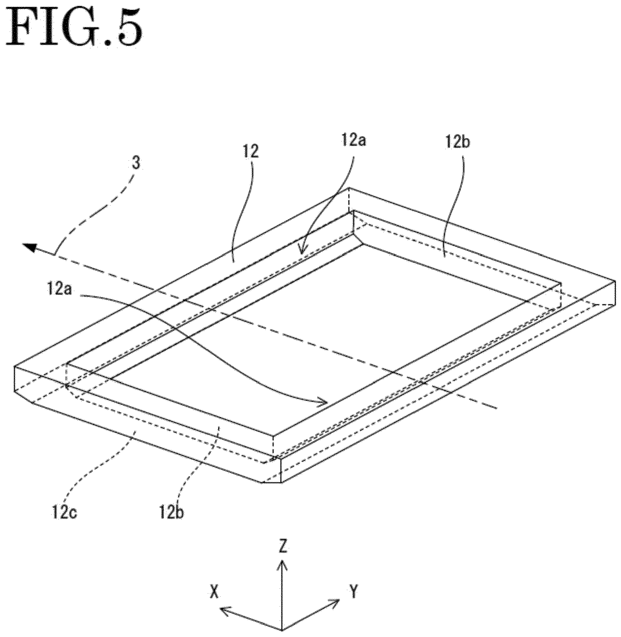

First, an optical line sensor unit 1 will be described with reference to FIGS. 1, 2, 3, 4, and 5. FIG. 1 is a cross-sectional view schematically illustrating an example of a configuration of the optical line sensor unit 1 according to an embodiment of the present invention, FIG. 2 is a perspective view schematically illustrating a part of an example of the configuration of the optical line sensor unit 1 according to the embodiment of the present invention, FIG. 3 is a perspective view schematically illustrating an example of a configuration of an optical line sensor member 9 according to the embodiment of the present invention, FIG. 4 is a perspective view schematically illustrating an example of a configuration of a transparent member 11 according to the embodiment of the present invention, and FIG. 5 is a perspective view schematically illustrating an example of a configuration of a cover member 12 according to the embodiment of the present invention.

At least one or more of the optical line sensor units 1 provided in a conveyance path 3 for conveying a paper sheet 2 includes a housing 4, a light source unit 5, a lens array 6, a substrate 7, a light receiving unit 8 mounted on the substrate 7, and an optical line sensor member 9. Note that the paper sheet 2 in the present embodiment corresponds to, for example, general-purpose paper, paper money, and securities.

Further, as illustrated in FIG. 2, the housing 4 and the substrate 7 extend in a Y direction, and the light source unit 5, the lens array 6, and the light receiving unit 8 extend in the Y direction in the housing 4. Further, as illustrated in FIG. 3, the optical line sensor member 9 also extends in the Y direction similarly to the housing 4. The Y direction is a main scanning direction.

The light source unit 5 is a line light source for irradiating the paper sheet 2 conveyed in an X direction on the conveyance path 3 with light. The X direction is a sub-scanning direction and is orthogonal to the Y direction. Further, as illustrated in FIG. 2, the light source unit 5 includes a first light source 5a and a second light source 5b, the first light source 5a is provided at an end portion of the light source unit 5 in the Y direction, and the second light source 5b is provided at another end portion.

The first light source 5a includes an ultraviolet light source and a substrate for mounting the ultraviolet light source, and the second light source 5b includes a light source corresponding to light other than ultraviolet light and a substrate for mounting the light source. Note that, here, the light other than ultraviolet light includes at least one of visible light and infrared light. However, a type of the light source is not limited to these, and one of the first light source 5a and the second light source 5b can be omitted.

Further, the light source unit 5 includes a substrate 5c for supplying power to the first light source 5a or the second light source 5b, and the substrate 5c is connected to a power supply (not illustrated) for driving the light source unit 5.

Furthermore, the light source unit 5 includes a light guide 5d and a cover member 5e for holding the light guide 5d, and light incident on the light guide 5d from the first light source 5a and the second light source 5b is diffused and refracted in the light guide 1, and then emitted from the light guide 1. The light guide 1 extends in the Y direction, and the first light source 5a and the second light source 5b are provided at both end portions of the light guide 1 in the Y direction. Light emitted from a side surface (emission surface) of the light guide 1 along the Y direction is emitted with a uniform light amount along the Y direction.

The paper sheet 2 is irradiated with visible light, ultraviolet light, infrared light, and the like from the light source unit 5. Further, for ultraviolet light, any value between 300 nm and 400 nm is taken as a peak wavelength, and for infrared light, any value up to 1500 nm is taken as a peak wavelength.

Furthermore, at least ultraviolet light of light with which the paper sheet 2 is irradiated may be emitted so as not to temporally overlap other light (that is, while being temporally switched). Moreover, infrared light may be emitted so as to temporally overlap visible light, or may be emitted so as not to temporally overlap visible light.

The lens array 6 is an optical element for forming an image of (converging) light (reflected light and fluorescence) from the paper sheet 2 on the light receiving unit 8, and a rod lens array such as SELFOC lens array (registered trademark: manufactured by Nippon Sheet Glass Co., Ltd) is used as the lens array 6. In the embodiment of the present invention, magnification of the lens array 6 is set to 1 (upright). Further, the lens array 6 may be provided with an optical filter that blocks ultraviolet light in order to prevent irradiation of the light receiving unit 8 with ultraviolet light.

The light receiving unit 8 is configured to include at least a general-purpose light receiving element. In the light receiving unit 8, light from the paper sheet 2 is detected, and a signal corresponding to a light amount of the light is output to the substrate 7. Further, as the light receiving unit 8, what is called a multi-chip type linear image sensor in which a plurality of integrated circuits (ICs) in which a photodiode, a phototransistor, a drive circuit, and an amplifier circuit are integrated are arranged may be used.

Further, an electric circuit such as a drive circuit or an amplifier circuit, a connector for extracting a signal to the outside, or the like may be mounted on the substrate 7 as necessary. Furthermore, an A/D converter, various correction circuits, an image processing circuit, a line memory, an I/O control circuit, and the like may be mounted on the substrate 7, and a digital signal may be extracted to the outside.

The optical line sensor member 9 is provided to protect the light source unit 5, the lens array 6, and the like from dust (for example, paper dust). As illustrated in FIG. 1, the optical line sensor member 9 is provided between the conveyance path 3 and the housing 4 so as to cover an internal space of the housing 4 in which the light source unit 5, the lens array 6, and the like are provided.

As illustrated in FIG. 3, the optical line sensor member 9 includes the transparent member 11 and the cover member 12 provided around the transparent member 11, and a transparent plate that transmits light is used as the transparent member 11.

As the transparent member 11, for example, a plate made from glass, specifically, white plate glass, borosilicate glass, or the like is used from the viewpoint of abrasion resistance. Glass has excellent transmittance for ultraviolet rays, and further has excellent transmittance not only for ultraviolet rays but also to a near-infrared region. Further, as the transparent member 11, a plate made from resin, specifically, a plate made from acrylic resin, cycloolefin-based resin, or the like may be used.

Furthermore, a conveyance surface 11c of the transparent member 11 is a surface located on the conveyance path 3 side among surfaces parallel to the conveyance path 3, and an incident surface 11d is a surface located on the opposite side to the conveyance path 3 side among surfaces parallel to the conveyance path 3 and on which light from the light source unit 5 is incident.

As the cover member 12, for example, an opaque plate that does not transmit light is used. Since a material and material quality of the cover member 12 are not particularly limited, for example, a plate made of resin or the like as described above is used as the cover member 12. From the viewpoint of reduce stray light caused by light from outside a viewing angle (see FIG. 1) via the lens array 6 of the light receiving unit 8, a black plate may be used as the cover member 12.

Further, a conveyance surface 12c of the cover member 12 is a surface located on the conveyance path 3 side among surfaces parallel to the conveyance path 3.

Note that the center of a region defined by an inner peripheral edge of the conveyance surface 11c, the center of the incident surface 11d, the center of the conveyance surface 12c, and the center of a region defined by an outer periphery of the housing 4 on an XY plane overlap in a Z direction.

Further, in the present embodiment, the width of the conveyance surface 11c in the X direction is smaller than the width of the housing 4 in the X direction. The same applies to the width of the conveyance surface 11c in the Y direction.

Furthermore, the width of the incident surface 11d in the X direction is set to size between the width of the housing 4 in the X direction and the width of the conveyance surface 11c in the X direction. The same applies to the width of the incident surface 11d in the Y direction. That is, the entire conveyance surface 11c overlaps a part of the incident surface 11d in the Z direction.

Furthermore, the transparent member 11 in the present embodiment abuts on the cover member 12 on each of a pair of abutting surfaces 11a facing each other and a pair of abutting surfaces 11b facing each other. Specifically, a pair of the abutting surfaces 11a abut on a pair of abutting surfaces 12a of the cover member 12 facing each other, and a pair of the abutting surfaces 11b abut on a pair of abutting surfaces 12b of the cover member 12 facing each other.

As illustrated in FIGS. 1 and 4, a part or the whole of each of the abutting surfaces 11a is formed of a tapered surface that tapers toward the conveyance path 3, and inclination angles of the tapered surfaces of the abutting surfaces 11a with respect to the conveyance surface 12c coincide with each other. That is, the transparent member 11 has a substantially trapezoidal shape including a trapezoidal shape in the whole or a part of a cross section, and a tapered surface is formed in the cross section by the trapezoidal shape. In the trapezoidal shape of the cross section of the transparent member 11, a portion corresponding to a short side (conveyance surface 11c) is a side on which the paper sheet 2 is conveyed.

Note that, although detailed description will be given later, in the present embodiment, the abutting surfaces 11a and the abutting surfaces 12a abut on each other with an adhesive interposed between them. The same applies to the abutting surfaces 11b and the abutting surfaces 12b. That is, the transparent member 11 and the cover member 12 illustrated in FIGS. 1 and 3 are bonded to each other with an adhesive. Specifically, the transparent member 11 and the cover member 12 are bonded to each other such that the conveyance surface 11c and the conveyance surface 12c are flush with each other.

In the optical line sensor unit 1 described above, for example, the paper sheet 2 conveyed on the conveyance path 3 is irradiated with light, a signal based on light (reflected light and fluorescence) from the paper sheet 2, that is, a signal corresponding to a surface of the paper sheet 2 is output to the outside, and for example, an image corresponding to the surface of the paper sheet 2 is generated. However, the present invention is not limited to the configuration in which the paper sheet 2 is irradiated with ultraviolet light to cause fluorescence to be emitted, and a configuration in which only reflected light from the paper sheet 2 is received by the light receiving unit 8 may be employed. Further, in a case where the present invention is applied to a transmissive optical line sensor unit instead of a reflective optical line sensor unit, a light source may be arranged on the opposite side of the light receiving unit 8 across the conveyance path 3. In this case, a configuration in which light emitted from the light source is transmitted through the paper sheet 2, and the transmitted light is received by the light receiving unit 8 may be employed.

### 2. Method for manufacturing optical line sensor member

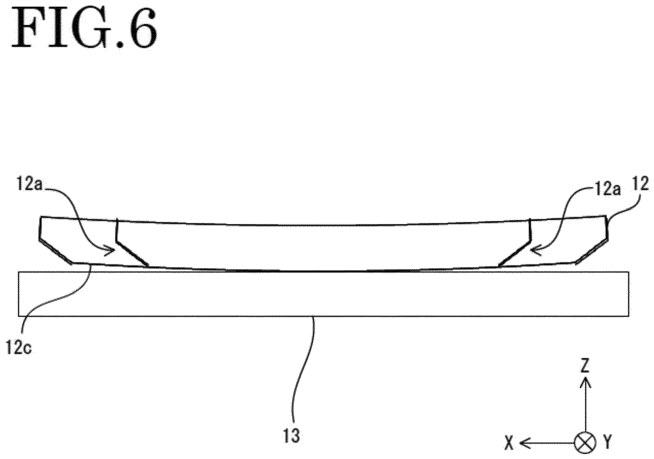

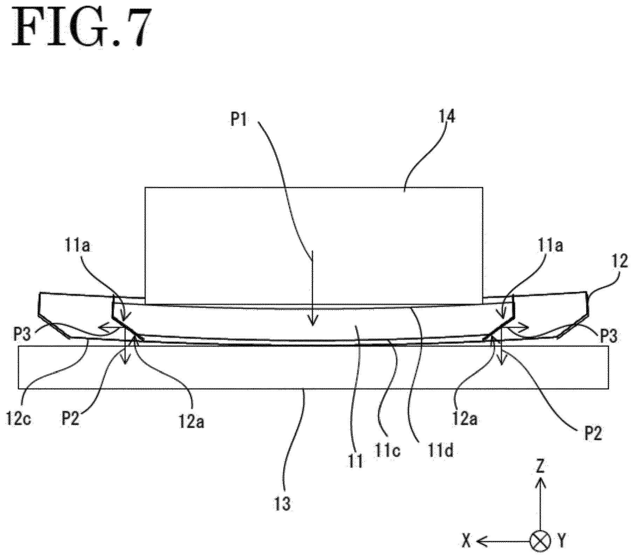

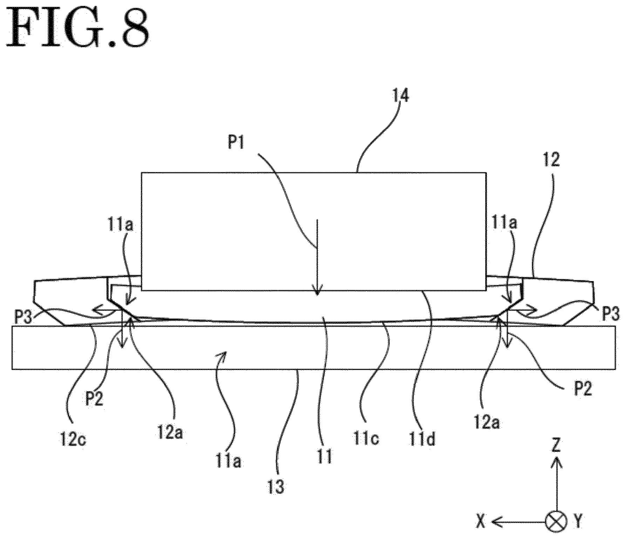

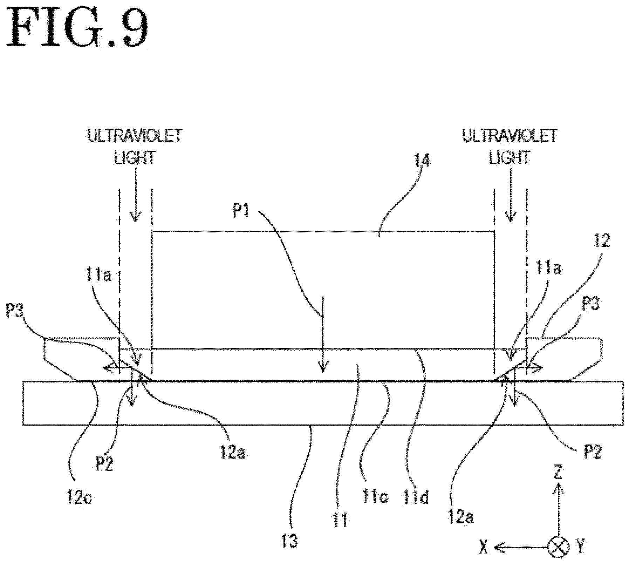

Next, an example of a method for manufacturing the optical line sensor member 9 will be described with reference to FIGS. 6, 7, 8, and 9. FIG. 6 is a cross-sectional view schematically illustrating an example of a state in which the cover member 12 is arranged on a flat plate 13, FIG. 7 is a cross-sectional view schematically illustrating an example of a state in which the transparent member 11 is pressed, FIG. 8 is a cross-sectional view schematically illustrating another example of the state in which the transparent member 11 is pressed, and FIG. 9 is a cross-sectional view schematically illustrating an example of a state in which an adhesive is cured.

First, the transparent member 11, the cover member 12, the flat plate 13, and a pressing member 14 are prepared. Note that, as illustrated in FIG. 7, the transparent member 11 and the cover member 12 are assumed to have warpage from the viewpoint of a linear expansion coefficient, and hereinafter, a case where both the transparent member 11 and the cover member 12 are warped in a U shape will be described as an example. In order to prevent a step from being generated in the joint portion between the transparent member 11 and the cover member 12 on the conveyance path 3 side, it is necessary to perform warp correction uniformly in the entire joint portion to perform the joining while there is a dimensional tolerance of each member. If there is a location where the warp correction is not uniform even a little, this portion becomes a step and hinders the conveyance of the paper sheet 2. Note that the flat plate 13 here is a reference table constituted by a plate-shaped rigid body, and a material and material quality of the flat plate 13 are not particularly limited as long as the flat plate 13 is a rigid body. The same applies to the pressing member 14.

Next, as illustrated in FIG. 6, the cover member 12 is arranged on the flat plate 13. Specifically, the cover member 12 is arranged on the flat plate 13 such that the conveyance surface 12c abuts on the flat plate 13 and the conveyance surface 12c and the flat plate 13 are substantially parallel to each other.

Subsequently, a part or the whole of the transparent member 11 is arranged in a space (arrangement space) in the cover member 12. In the arrangement space, the width in the X direction, the width in the Y direction, and the width in the Z direction are defined by the abutting surfaces 12a and the abutting surfaces 12b. Specifically, as illustrated in FIG. 7, the transparent member 11 is arranged in the arrangement space such that the conveyance surface 11c is substantially parallel to the conveyance surface 12c and the flat plate 13. Note that, in this case, the abutting surfaces 12a and the abutting surfaces 11a face each other. Further, similarly, the abutting surfaces 12b and the abutting surfaces 11b face each other. Furthermore, in a case where the transparent member 11 is arranged in the arrangement space, the center of a region defined by an inner peripheral edge of the conveyance surface 11c, the center of the incident surface 11d, and the center of the conveyance surface 12c overlap in the Z direction.

Further, when the transparent member 11 is arranged in the arrangement space, an adhesive is applied to each of the abutting surfaces 12a and each of the abutting surfaces 12b in advance. Furthermore, the adhesive may be applied in advance to each of the abutting surfaces 11a and each of the abutting surfaces 11b instead of each of the abutting surfaces 12a and each of the abutting surfaces 12b, or may be applied in advance to each of the abutting surfaces 11a, each of the abutting surfaces 11b, each of the abutting surfaces 12a, and each of the abutting surfaces 12b.

Next, as illustrated in FIG. 7, the pressing member 14 is arranged on the incident surface 11d of the transparent member 11. Specifically, the pressing member 14 is arranged on the incident surface 11d such that the pressing member 14, the conveyance surface 11c, the conveyance surface 12c, and the flat plate 13 are substantially parallel to each other. Further, in this case, the center of the pressing member 14 overlaps the center of the conveyance surface 12c or the like in the Z direction.

Next, as illustrated in FIG. 7, the pressing member 14 is used to press the transparent member 11 in a direction (pressing direction) P1 toward the flat plate 13. In the present embodiment, in a case where the transparent member 11 is pressed using the pressing member 14, a force in the pressing direction P1 is applied to the pressing member 14 from the outside. Further, the transparent member 11 may be pressed using the weight of the pressing member 14. However, in this case, it is limited to a case where the direction of gravity and the pressing direction P1 coincide with each other.

Further, in the present embodiment, the force in the pressing direction P1 is a force stronger than stress in the transparent member 11 and the cover member 12, specifically, tensile stress and compressive stress.

As illustrated in FIG. 7, when the force in the pressing direction P1 acts on the transparent member 11, since the abutting surfaces 11a and the abutting surfaces 12a abut on each other, forces in a direction P2 and a direction P3 act on the cover member 12. The force in the direction P2 is a force in a direction perpendicular to the flat plate 13, and each of the abutting surfaces 12a of the cover member 12 is pressed toward the flat plate 13 side by this force. The force in the direction P3 is a force for expanding the cover member 12 outward, and the cover member 12 receives this force and expands outward until the transparent member 11 comes into contact with the flat plate 13 at the joint portion between the transparent member 11 and the cover member 12 on the conveyance path 3 side.

In this case, both end portions in the X direction of the cover member 12 are expanded by the force in the direction P3, and a part of the conveyance surface 11c of the transparent member 11 abuts on the flat plate 13 by the force in the pressing direction P1. Then, as the force in the pressing direction P1 is applied further, the warpage of the transparent member 11 is corrected. Furthermore, as the warpage of the transparent member 12 is corrected, the warpage of the cover member 12 is corrected. Specifically, the warpage of the cover member 12 is corrected due to a force in the direction P2. When the warpage of the transparent member 11 and the cover member 12 is corrected, the transparent member 11 and the cover member 12 are adhered to each other in a state where the conveyance surface 11c and the conveyance surface 12c are flush with each other as illustrated in FIG. 9.

Further, for example, as illustrated in FIG. 9, in a case where the cover member 12 is warped so as to protrude in a direction opposite to the pressing direction P1, the warpage of the transparent member 11 is similarly corrected due to the force in the pressing direction P1. Further, as the warpage of the transparent member 11 is corrected, the warpage of the cover member 12 is corrected.

As described above, in a case where the transparent member 11 having the tapered surface and the cover member 12 are bonded to each other using the flat plate 13 and the pressing member 14, at the joint portion between the transparent member 11 and the cover member 12, the tapered surface (each of the abutting surfaces 12a) of the cover member 12 is corrected along the tapered surface (each of the abutting surfaces 11a) of the transparent member 11, so that the members can be joined to each other with a difference in warpage correction between the members minimized. By the above, it is possible to easily eliminate a step that hinders the conveyance of the paper sheet 2. While there is a tolerance in thickness between the transparent member 11 and the cover member 12 in principle, in the present invention, by providing a tapered surface at the joint portion between the transparent member 11 and the cover member 12, it is possible to eliminate the step in principle even if there is a tolerance in thickness between both the transparent member 11 and the cover member 12.

Further, as the adhesive in the present embodiment, an ultraviolet curable adhesive is used, but the adhesive is not particularly limited as long as the adhesive can be applied in a liquid or gel state. For example, a thermosetting adhesive, a thermoplastic adhesive, a moisture curable adhesive, a two-liquid curable adhesive, or the like may be used.

The ultraviolet curable adhesive is an adhesive that is cured by being irradiated with ultraviolet light. The thermosetting adhesive is an adhesive that is cured by being heated. The thermoplastic adhesive is an adhesive that is melted when heated and then cured when cooled. The moisture curable adhesive is an adhesive that reacts with moisture in the air to be cured. The two-liquid curable adhesive is an adhesive that is cured by mixing a curing agent with a main agent.

Next, a method for curing the adhesive that joins the transparent member 11 and the cover member 12 will be described. In a case where the ultraviolet curable adhesive is used, the transparent member 11 and the cover member 12 are irradiated with ultraviolet light using an external ultraviolet light source (external ultraviolet light source). However, in this curing method, there is a possibility that the adhesive seeping out to the conveyance surface 11c and the conveyance surface 12c side is cured. Further, in a case where the adhesive seeping out to each conveyance surface side is cured, various troubles occur.

Therefore, when the ultraviolet curable adhesive is used as in the present embodiment, the pressing member 14 and the cover member 12 are used as shielding objects for ultraviolet light. However, in this case, the size of a surface of the pressing member 14 abutting on the incident surface 11d is set to be the size matching the conveyance surface 11c. That is, in the Z direction, the entire surface abutting on the incident surface 11d of the pressing member 14 and the entire conveyance surface 11c overlap each other.

When the transparent member 11 and the cover member 12 are joined with the ultraviolet curable adhesive, the cover member 12 is set on the flat plate 13, and the ultraviolet curable adhesive is applied to the abutting surfaces 12a and 12b of the cover member 12. After the ultraviolet curable adhesive is applied, the transparent member 11 is pressed in a perpendicular direction to the flat plate 13 by the pressing member 14 in a manner that the abutting surfaces 11a and 11b of the transparent member 11 and the abutting surfaces 12a and 12b of the cover member 12 are aligned. While such a pressed state is maintained, as illustrated in FIG. 9, the ultraviolet curable adhesive is irradiated with ultraviolet light and cured. At this time, the ultraviolet curable adhesive seeping out to the conveyance surfaces 11c and 12c side of the transparent member 11 and the cover member 12 is desirably not cured.

In the present embodiment, the external ultraviolet light source is arranged at a position facing the transparent member 11 with the pressing member 14 interposed between them, and ultraviolet light from the external ultraviolet light source is emitted in the same direction as the pressing direction P1. By the above, as illustrated in FIG. 9, since a part of the ultraviolet light is blocked by the cover member 12 and the pressing member 14, the adhesive seeping out to the conveyance surfaces 11c and 12c side is not irradiated with the ultraviolet light.

Specifically, the width of the pressing member 14 in the X direction is set to be the same as the width of the conveyance surface 11c of the transparent member 11 in the X direction. In this manner, the pressing member 14 blocks ultraviolet light, so that it is possible to prevent curing of the ultraviolet curable adhesive seeping out to the conveyance surface 11c side of the transparent member 11 at the time of bonding. Further, the abutting surface 12a of the cover member 12 blocks the ultraviolet light with respect to the ultraviolet curable adhesive seeping out to the conveyance surface 12c side of the cover member 12, and the ultraviolet curable adhesive can be prevented from being cured.

As described above, the adhesive interposed between each of the abutting surfaces 11a and each of the abutting surfaces 12a is cured due to ultraviolet light. The adhesive interposed between each of the abutting surfaces 11b and each of the abutting surfaces 12b is also cured in the same manner. Note that the adhesive that is not cured is removed as cleaning is performed after the transparent member 11 and the transparent member 12 are joined to each other.

### 3. Variation

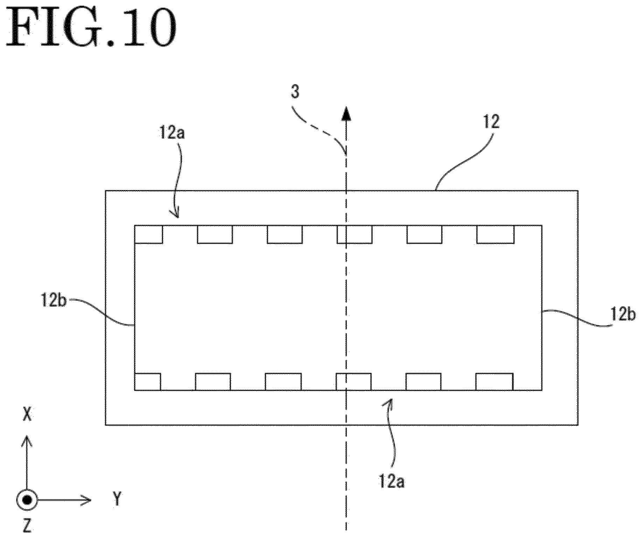

FIG. 10 is a plan view schematically illustrating an example of a configuration of the cover member 12 according to a variation of the present invention. In this variation, only a part of each of the abutting surfaces 12a is formed to include a tapered surface in the Y direction. For example, as illustrated in FIG. 10, a portion including the tapered surface and a portion not including the tapered surface may be alternately positioned in the Y direction of each of the abutting surfaces 12a. Note that the same applies to each of the abutting surfaces 11a.

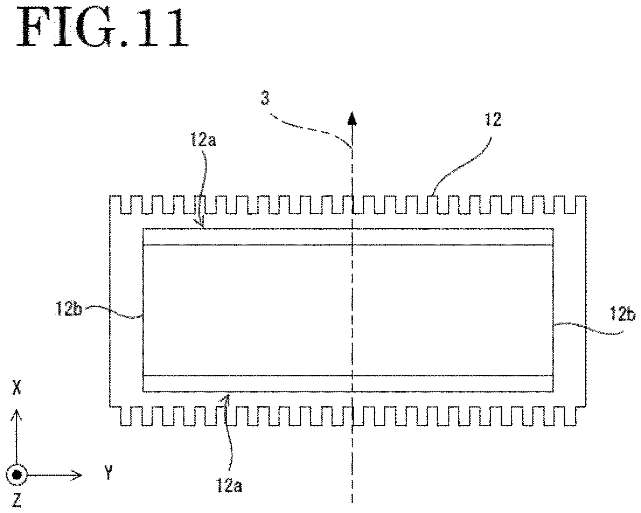

FIG. 11 is a plan view schematically illustrating another example of the configuration of the cover member 12 according to the variation of the present invention. In this variation, portions which are both end portions of the cover member 12 in the X direction and do not overlap the housing 4 and the lens array 6 and the like provided in the housing 4 in the Z direction are formed in a comb tooth shape.

Then, the optical line sensor unit 1 of the present embodiment formed in a comb tooth shape is arranged on the conveyance path. At that time, the optical line sensor unit 1 is fitted to comb teeth formed on the conveyance path. Accordingly, smooth conveyance is realized.

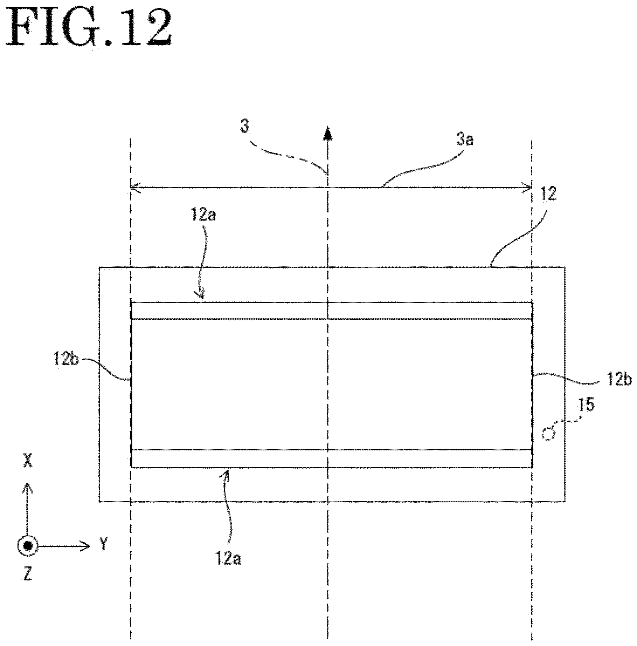

FIG. 12 is a plan view schematically illustrating another example of the configuration of the cover member 12 according to the variation of the present invention. A conveyance width 3a in FIG. 12 indicates the actual width of the paper sheet 2 conveyed along the conveyance path 3, and the size of the conveyance width 3a coincides with the width of the transparent member 11 in the Y direction.

In this variation, a protruding portion 15 protruding toward the conveyance path 3 is provided at both end portions in the Y direction of the conveyance surface 12c of the cover member 12 at a portion not overlapping the conveyance width 3a in the Z direction. That is, on the conveyance surface 12c, the protruding portion 15 is provided at a position that does not interfere with the conveyance of the paper sheet 2. As described above, in a case where the cover member 12 has the protruding portion 15 protruding to the conveyance path 3, the flat plate 13 may have a recess in which the protruding portion 15 is accommodated.

In general, in a case where a surface of the paper sheet 2 is read using the optical line sensor unit 1, a detection sensor for detecting the position of the paper sheet 2 and the optical line sensor unit 1 are provided at positions facing each other via the conveyance path 2. For example, when a reading device including the optical line sensor unit 1 and the detection sensor as components is assembled, the detection sensor can be arranged with reference to the protruding portion 15.

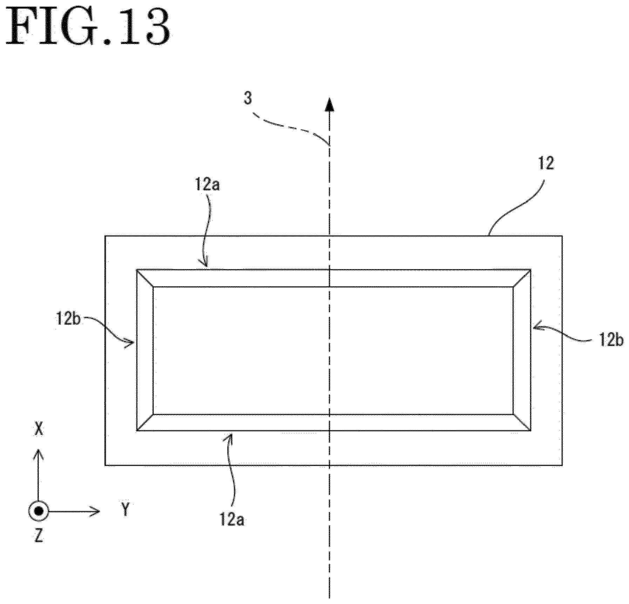

FIG. 13 is a plan view schematically illustrating still another example of the configuration of the cover member 12 according to the variation of the present invention. In this variation, each of the abutting surfaces 12b is formed in the same manner as each of the abutting surfaces 12a. That is, a part or the whole of each of the abutting surfaces 12b is formed of a tapered surface that tapers toward the conveyance path 3. Further, the same applies to each of the abutting surfaces 11b.

Further, instead of the abutting surfaces 11a and the abutting surfaces 12a, the abutting surfaces 11b and the abutting surfaces 12b may be formed to include a tapered surface.

### DESCRIPTION OF REFERENCE SIGNS

- 1: optical line sensor unit
- 2: paper sheet
- 3: conveyance path
- 3a: conveyance width
- 4: housing
- 5: light source unit
- 5a: first light source unit
- 5b: second light source unit
- 5c: substrate
- 5d: light guide
- 5e: cover member
- 6: lens array
- 7: substrate
- 8: light receiving unit
- 9: optical line sensor member
- 11: transparent member
- 11a: abutting surface
- 11b: abutting surface
- 11c: conveyance surface
- 11d: incident surface
- 12: cover member
- 12a: abutting surface
- 12b: abutting surface
- 12c: conveyance surface
- 13: flat plate
- 14: pressing member
- 15: protruding portion

## Claims

1. An optical line sensor member as a member of an optical line sensor unit including a light source unit that emits light toward a conveyance path and a light receiving unit that outputs a signal corresponding to a light amount from the conveyance path, the optical line sensor member comprising:
a transparent member that transmits light incident on the light receiving unit; and
a cover member that is arranged so as to surround an outer periphery of the transparent member and does not transmit light,
wherein
the transparent member has a substantially trapezoidal shape in which a side on the conveyance path side is a short side in a cross section taken along a direction orthogonal to a main scanning direction, and has a tapered surface in which an inclination is provided on a side parallel to the main scanning direction,
the cover member has a tapered surface formed substantially parallel to the tapered surface provided on a side parallel to the main scanning direction of the transparent member, and
the tapered surface of the transparent member and the tapered surface of the cover member are joined by an adhesive.

2. The optical line sensor member according to claim 1, wherein the adhesive is any of an ultraviolet curable adhesive, a thermosetting adhesive, a thermoplastic adhesive, a moisture curable adhesive, and a two-liquid curable adhesive.

3. The optical line sensor member according to claim 1 or 2, wherein the transparent member is glass.

4. The optical line sensor member according to any of claims 1 to 3, wherein the transparent member has a substantially trapezoidal shape in which a side on the conveyance path side is a short side in a cross section taken along a direction orthogonal to a sub-scanning direction, and has a tapered surface in which an inclination is provided on a side parallel to the sub-scanning direction.

5. The optical line sensor member according to any of claims 1 to 4, wherein an end portion of a surface on an opposite side to a surface with which the transparent member is in contact has a comb tooth shape on a side parallel to the main scanning direction of the cover member.

6. A method for manufacturing the optical line sensor member according to any of claims 1 to 5, the method comprising the steps of
applying the adhesive to the tapered surface of the transparent member or the tapered surface of the cover member;
causing the tapered surface of the transparent member and the tapered surface of the cover member to face each other;
placing a flat plate on the conveyance path side and pressing the transparent member against the flat plate by a pressing member from a direction opposite to the conveyance path side; and
curing the adhesive.

7. The method for manufacturing the optical line sensor member according to claim 6, wherein
the adhesive is an ultraviolet curable adhesive, and
in the step of curing the adhesive, the tapered surface of the transparent member and the tapered surface of the cover member are irradiated with ultraviolet light from an ultraviolet light source.

8. The method for manufacturing the optical line sensor member according to claim 7, wherein in the step of curing the adhesive, part of ultraviolet light from the ultraviolet light source is blocked by the pressing member.
